# EUROPÄISCHE PATENTSCHRIFT

(11) **EP 1 686 275 B1**
(45) Veröffentlichungstag und Bekanntmachung des Hinweises auf die Patenterteilung: **24.09.2008**
(21) Anmeldenummer: 05100515.5
(22) Anmeldetag: 27.01.2005
(51) Int. Cl.: F16D 21/06

(54) **Doppelkupplung**
Dual clutch
Embrayage double

(43) Veröffentlichungstag der Anmeldung: 02.08.2006
(73) Patentinhaber: Getrag Ford Transmissions GmbH, 50735 Köln (DE)
(72) Erfinder: Bungart, Stephan, 42855, Remscheid (DE)

(56) Entgegenhaltungen:
- DE-A1- 19 957 150
- FR-A- 2 810 708
- US-A1- 2003 168 302

## Beschreibung

Die Erfindung betrifft eine Doppelkupplung mit einer ersten Trockenkupplung und mit einer zweiten Trockenkupplung für ein Getriebe mit einer ersten Getriebeeingangswelle und einer dazu koaxial angeordneten zweiten Getriebeeingangswelle.

Aus der DE 102 54 900 A1 ist eine Doppelkupplung der oben genannten Art bekannt. Eine dort offenbarte Doppelkupplungsanordnung umfasst eine Doppelkupplung mit einem um eine Drehachse drehbaren Kupplungsdeckel, der mit einer Sekundärseite einer Torsionsschwingungsdämpferanordnung verschraubt ist, wodurch die Sekundärseite sowohl in Drehrichtung als auch in axialer Richtung fest mit dem Kupplungsdeckel verbunden ist. Die Primärseite der Torsionsschwingungsdämpferanordnung ist an einer Antriebswelle eines Motors befestigt. Zwischen der Primärseite und der Sekundärseite der Torsionsschwingungsdämpferanordnung sind Federn zur Schwingungsdämpfung vorgesehen.

Die erste Trockenkupplung, bestehend aus einer axial verschiebbaren Druckplatte, einer Widerlagerplatte und einer zwischen Druckplatte und Widerlagerplatte angeordneten Reibscheibe, ermöglicht eine Drehmomentübertragung zwischen dem Kupplungsdeckel und einer ersten Getriebeeingangswelle, wenn die Druckplatte gegen die Widerlagerplatte gedrückt wird. Während die Widerlagerplatte und die Druckplatte drehfest mit dem Kupplungsdeckel verbunden ist, ist die Reibscheibe drehfest mit der Getriebeeingangswelle verbunden.

Ein ähnlicher Aufbau mit den Bauteilen Widerlagerplatte, axial verschiebbarer Druckplatte sowie Reibscheibe ist bei der zweiten Trockenkupplung der Doppelkupplung gegeben, wobei die entsprechende Reibscheibe drehfest mit der zweiten Getriebeeingangswelle verbunden ist. Die Druckplatten der ersten und zweiten Trockenkupplung werden durch eine Hebelanordnung mit dazu gehörigen Drucklagern betätigt, die in axialer Richtung neben den Trockenkupplungen angeordnet sind.

Bei der oben genannten DE 102 54 900 A1 sind die erste und die zweite Trockenkupplung axial nebeneinander angeordnet, was zu einer gewissen axialen Bauhöhe der Doppelkupplung führt. In einem Ausführungsbeispiel in der DE 102 54 900 A1 sind die beiden Trockenkupplungen in axialer Richtung leicht verschachtelt. Aber auch in diesem Ausführungsbeispiel ist die Hebelanordnung in axialer Richtung raumgreifend aufgebaut, so dass die Doppelkupplung insgesamt viel axialen Bauraum benötigt.

Aus der DE 199 57 150 A1 ist eine Doppelkupplung mit zwei Getriebeeingangswellen und einer ersten und zweiten Trockenkupplung bekannt, wobei die Druckplatte der ersten Trockenkupplung einen Innendurchmesser aufweist, der größer ist als ein Außendurchmesser der Druckplatte der zweiten Trockenkupplung. Zur Aufnahme der im Betrieb der Doppelkupplung auftretenden Kräfte sind Axial- und Radiallager notwendig. Je nach gewähltem Lagerungskonzept kann es bei der Montage problematisch sein, die Doppelkupplung in eine Getriebeglocke des Getriebes einzusetzen.

Der Erfindung liegt die Aufgabe zu Grunde, eine Doppelkupplung bereitzustellen, die einfach aufgebaut ist und eine geringe axiale Bauhöhe aufweist.

Die der Erfindung zugrunde liegende Aufgabe wird durch Anspruch 1 gelöst. Demnach weist die Druckplatte der ersten Trockenkupplung einen Innendurchmesser auf, der größer ist als ein Außendurchmesser der Druckplatte der zweiten Trockenkupplung. Dies bedeutet, dass die beiden Trockenkupplungen, um axialen Bauraum zu sparen, in radialer Richtung nebeneinander angeordnet sind, wobei die erste Trockenkupplung radial außenliegend und die zweite Trockenkupplung radial innenliegend angeordnet sind. Den geometrischen Maßen der jeweiligen Druckplatten angepasst sind die Maße der zugehörigen Widerlagerplatten und Reibscheiben, wodurch eine in axialer Richtung raumsparende Anordnung der beiden Trockenkupplung zueinander ermöglicht wird.

Da die Druckplatte der zweiten Trockenkupplung so bemessen ist, dass sie in axialer Richtung durch die ringförmige Öffnung der Druckplatte der ersten, außenliegenden Trockenkupplung passt, lassen sich in einfacher Weise die beiden Druckplatten von einer axialen Seite der Doppelkupplung betätigen, wobei bei Betätigung der Druckplatten diese in jeweils eine gleiche axiale Richtung gedrückt werden können. Entsprechend lässt sich die Betätigungseinrichtung einfach aufbauen, da jeweils Druck in nur eine Richtung aufgebaut beziehungsweise weitergeleitet werden muss.

An einer Getriebeseite der Doppelkupplung ist ein erstes Lager vorgesehen, das zur Abstützung der Doppelkupplung in radialer Richtung dient und das sich in Einbaulage der Doppelkupplung an einer der Getriebeeingangswellen abstützt. Dabei kann das erste Lager als Gleitlager oder Radialnadellager ausgebildet sein. Vorzugsweise stützt sich dabei das erste Lager an der zweiten Getriebeeingangswelle und das zweite Lager an der ersten Getriebeeingangswelle ab. Die erste Getriebeeingangswelle ist zweckmäßig als Kernwelle ausgebildet, während die zweite Getriebeeingangswelle zweckmäßig eine die Kernwelle umgreifende Hohlwelle ist.

Das erste Lager ist in radialer Richtung gesehen zwischen der Druckplatte der zweiten Trockenkupplung und einer Nabe angeordnet, die drehfest und axial verschiebbar mit der zweiten Getriebeeingangswelle verbindbar ist. Wenn die Druckplatte der zweiten Trockenkupplung betätigt wird, verschieben sich gemeinsam mit der Druckplatte das zweite Lager und die Nabe in axialer Richtung.

Vorzugsweise weist die zweite Trockenkupplung bzw. die innere Trockenkupplung wenigstens zwei Reibscheiben und wenigstens eine Zwischenplatte auf, wobei die eine Reibscheibe zwischen Druckplatte und Zwischenplatte und die andere Reibscheibe zwischen Zwischenplatte und Widerlagerplatte angeordnet ist. Dadurch lässt sich die zweite Trockenkupplung auch mit ausreichender Drehmomentkapazität so kompakt bauen, dass sie in radialer Richtung neben oder unterhalb der ersten Trockenkupplung angeordnet werden kann.

In einem bevorzugten Ausführungsbeispiel ist an einer Motorseite der Doppelkupplung ein zweites Lager vorgesehen ist, das zur axialen Abstützung der ersten Trockenkupplung und der zweiten Trockenkupplung dient und sich in Einbaulage der Doppelkupplung an einer der Getriebeeingangswellen abstützt. Durch das an der Motorseite angeordnete zweite Lager vereinfacht sich der Aufbau der Doppelkupplung, da an der axial gegenüberliegenden Seite der Doppelkupplung nur die Betätigungseinrichtung zur Betätigung der Druckplatten der ersten und zweiten Trockenkupplung vorgesehen sein kann. Durch die räumliche Trennung der Betätigungseinrichtung und des zweiten Lagers zur axialen Abstützung der Trockenkupplungen beziehungsweise der Widerlagerplatten der Trockenkupplungen kann die Doppelkupplung in axialer Richtung kurz gebaut werden, so dass deren Einsatz auch bei Kraftfahrzeugen mit wenig Bauraum möglich ist.

Das zweite Lager kann so ausgelegt sein, dass es neben den axialen Kräften auch radial wirkende Kräfte aufnimmt und diese in eine der Getriebeeingangswellen abführt. Alternativ oder zusätzlich zu dem zweiten Lager kann an der Motorseite der Doppelkupplung ein ringförmiger Vorsprung ausgebildet sein, der sich in radialer Richtung an einer entsprechend ausgeformten Führung eines Bauteils abstützt, das mit dem Motor fest verbunden ist.

Durch das oben beschriebene Lagerungskonzept aus Radial- und Axiallager ist es möglich, die Doppelkupplung einfach in eine Getriebekupplungsglocke des Getriebes zu montieren, wobei die axialen Betätigungskräfte durch die Betätigungseinrichtung über die beiden Getriebeeingangswellen von den Getriebehauptlagern des Getriebes aufgenommen werden. Bei diesem Konzept bleibt die Antriebswelle, bei einem Kraftfahrzeug mit Hubkolbenmotor die Motorkurbelwelle, axialkraftfrei, was eine unabhängige Kombination von Motor und Getriebe erlaubt. Somit können mit der erfindunggemäßen Doppelkupplung auch Motoren kombiniert werden, deren Kurbelwellen für die Aufnahme von größeren Axialkräften nicht ausgelegt sind.

Vorzugsweise ist die wenigstens eine Reibscheibe der zweiten Trockenkupplung drehfest mit der Nabe verbindbar. Somit überträgt die Reibscheibe, die zwischen der Druckplatte und der Widerlagerplatte der zweiten Trockenkupplung angeordnet ist, das Drehmoment auf die Nabe, die dieses auf die zweite Getriebeeingangswelle weiterleitet.

Vorzugsweise sind die Druckplatte und die Widerlagerplatte der ersten Trockenkupplung drehfest mit dem Kupplungsdeckel und die Reibscheibe der ersten Trockenkupplung drehfest mit der ersten Getriebeeingangswelle verbunden. Somit laufen Widerlagerplatte und Druckplatte der ersten Trockenkupplung jeweils synchron mit dem Kupplungsdeckel um, während im geöffneten Zustand lediglich die Reibscheibe der ersten Trockenkupplung mit der ersten Getriebeeingangswelle umläuft.

Auch bei der zweiten Trockenkupplung kann die Druckplatte und die Widerlagerplatte drehfest mit dem Kupplungsdeckel verbunden sein, während die Reibscheibe der zweiten Trockenkupplung drehfest mit der zweiten Getriebeeingangswelle verbunden ist. Auch kann beim Ausführungsbeispiel mit den wenigstens zwei Reibscheiben die dazwischen angeordnete Zwischenplatte ebenfalls drehfest mit dem Kupplungsdeckel verbunden.

In einem bevorzugten Ausführungsbeispiel umfasst die Betätigungseinrichtung eine erste Gruppe von sich in radialer Richtung erstreckenden Hebeln, durch die die Druckplatte der ersten Trockenkupplung betätigbar ist, wobei sich die Hebel mit einem radial gesehen äußeren Ende an dem Kupplungsdeckel in axialer Richtung abstützen und wobei deren jeweils radial gesehen innere Enden axial bewegbar sind. Das radial gesehen innere Ende eines Hebels wirkt mit einem Drucklager zusammen, das auf das innere Ende eine Axialkraft ausübt, wobei der Hebel mit einer Anlagefläche, die zwischen dem äußeren Ende und dem inneren Ende angeordnet ist, gegen die Druckplatte der ersten Trockenkupplung drückt. Das Verhältnis der Abstände zwischen Anlagefläche und äußerem Ende bzw. Anlagefläche und innerem Ende bestimmt das Hebelverhältnis des Hebels. Somit kann die Kraft, die durch das Drucklager auf das innere Ende wirkt, kleiner sein als die Kraft, die von dem Hebel auf die Druckplatte übertragen wird.

Vorzugsweise weist der Kupplungsdeckel eine ringförmige Auflagefläche für die erste Gruppe von Hebeln auf. Die Auflagefläche kann dabei durch einen radial nach innen gerichteten Abschnitt des Kupplungsdeckels gebildet sein.

Die Betätigungseinrichtung kann eine zweite Gruppe von sich in radialer Richtung erstreckender Hebel umfassen, durch die die Druckplatte der zweiten Trockenkupplung betätigbar ist, wobei sich die Hebel mit jeweils radial äußeren Enden an dem Kupplungsdeckel in axialer Richtung abstützen und wobei deren jeweils radial innere Enden axial bewegbar sind.

Die zweite Auflagefläche des Kupplungsdeckels kann durch mehrere radial nach innen gerichtete Zungen gebildet werden. Dabei sind vorzugsweise die Zungen und die Hebel der ersten Gruppe in Umfangsrichtung alternierend angeordnet. Dadurch können die Hebel der ersten Gruppe und die Hebel der zweiten Gruppe in axialer Richtung ineinander verschachtelt angeordnet sind, wodurch die axiale Bauhöhe der Doppelkupplung klein gehalten werden kann.

Die erste Gruppe von Hebeln kann an jeweils deren radial äußeren Enden miteinander verbunden sein. Somit können die Hebel der ersten Gruppe als ein einstückiges, scheibenförmiges Bauteil ausgeführt sein, das mehrere radiale Schlitze aufweist, durch die die einzelnen Hebel gebildet werden. Analoges gilt für die zweite Gruppe von Hebeln. Auch diese zweite Gruppe von Hebeln kann, unabhängig von der Ausgestaltung der Hebel der ersten Gruppe, an den jeweils radial äußeren Enden miteinander verbunden sein.

Anhand eines in den beiliegenden Figuren dargestellten Ausführungsbeispiels wird die Erfindung näher beschrieben. Es zeigen
- Figur 1: einen Längsschnitt einer erfindungsgemäßen Doppelkupplung; und
- Figur 2: eine perspektivische Ansicht der Doppelkupplung.

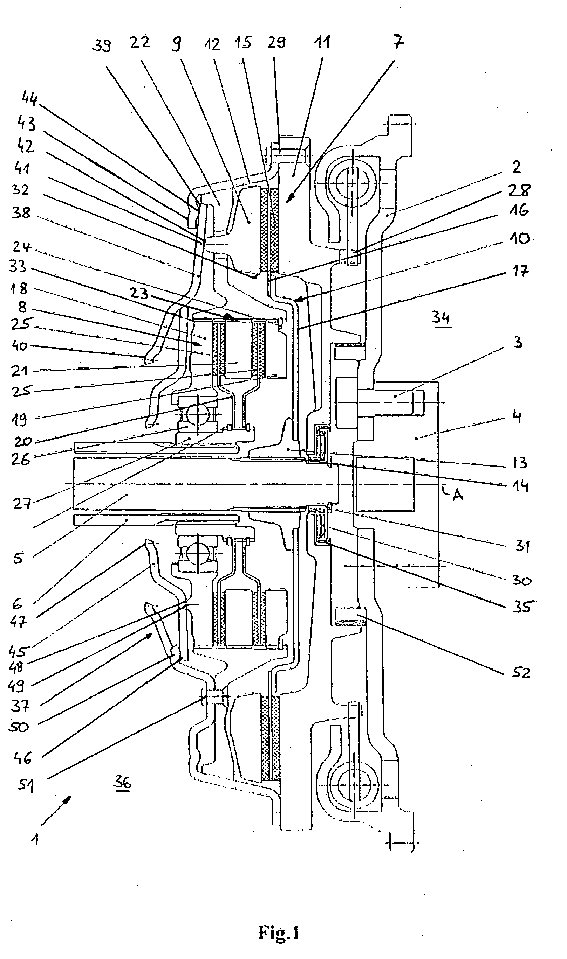

Figur 1 zeigt eine Doppelkupplung, die in ihrer Gesamtheit mit 1 bezeichnet wird. Die Doppelkupplung 1 ist im Längsschnitt dargestellt, wobei eine bezogen auf eine Drehachse A obere Hälfte der Doppelkupplung 1 und eine bezogen auf die Drehachse A untere Hälfte der Doppelkupplung 1 einen Winkel ungleich 180° einschließen. Das heißt, dass die untere Hälfte der Doppelkupplung 1 in die Zeichenebene der oberen Hälfte der Doppelkupplung 1 geschwenkt worden ist.

Die Doppelkupplung 1 ist eingangsseitig mit einem Torsionsschwingungsdämpfer 2 drehfest verbunden, der über mehrere Schrauben 3 an einer Kurbelwelle 4 eines hier nicht dargestellten Motors drehfest angeflanscht ist. Ausgangsseitig ist die Doppelkupplung mit einer ersten Getriebeeingangswelle 5 und mit einer zweiten Getriebewelleeingangswelle 6 eines Schaltgetriebes mit zwei schaltbaren Teilgetrieben (nicht dargestellt) beispielsweise in Trans-Axle- oder In-Line-Bauweise verbunden. Die erste Getriebeeingangswelle 5 und die zweite Getriebeeingangswelle 6 sind zur Achse A koaxial angeordnet, wobei die erste Getriebeeingangswelle 5 als Kernwelle und die die zweite Getriebeeingangswelle 6 als Hohlwelle ausgebildet sind.

Durch eine erste Trockenkupplung 7 lässt sich ein Drehmoment zwischen der Kurbelwelle 4 und der ersten Getriebeeingangswelle 5 übertragen. Eine zweite Trockenkupplung 8 sorgt für einen Drehmomentfluss zwischen der Kurbelwelle 4 und der zweiten Getriebeeingangswelle 6.

Die erste Trockenkupplung 7 umfasst eine axial verschiebbare Druckplatte 9, eine Reibscheibe 10 und eine Widerlagerplatte 11. Während die Druckplatte 9 und die Widerlagerplatte 11 drehfest mit einem Kupplungsdeckel 12 verbunden sind, ist die Reibscheibe 10 über eine Nabe 13 mit der ersten Getriebeeingangswelle 5 drehfest verbunden. Die Nabe 13 lässt sich auf einem Zahn- oder Keilwellenprofil 14 der Getriebeeingangswelle 5 axial verschieben.

Durch axialen Druck auf die Druckplatte 9 wird ein Drehmoment von der Druckplatte 9 beziehungsweise von der Widerlagerplatte 11 auf die Reibscheibe 10 übertragen. Die Reibscheibe 10 umfasst zwei scheibenförmige Reibbeläge 15, die auf einem Reibbelagsträger 16 aufgebracht sind. Ein tellerförmiger Radialsteg 17 verbindet den Reibbelagträger 16 mit der Nabe 13.

Die zweite Trockenkupplung 8 umfasst, ähnlich wie die erste Trockenkupplung 7, eine axial verschiebbare Druckplatte 18 und eine Widerlagerplatte 19. Zwischen der Druckplatte 18 und der Widerlagerplatte 19 sind zwei Reibscheiben 20 und eine Zwischenplatte 21 angeordnet. Die Druckplatte 18, die Zwischenplatte 21 und die Widerlagerplatte 19 sind über einen Kupplungsträger 22 in Drehrichtung und in axialer Richtung fest mit dem Kupplungsdeckel 12 verbunden. An einem Innendurchmesser des Kupplungsträgers 22 sorgt ein Zahn- oder Keilwellenprofil 23 für eine Drehmomentübertragung von dem Kupplungsdeckel 12 auf die Bauteile 18, 19 und 21 und ermöglicht gleichzeitig eine axiale Verschiebbarkeit dieser Bauteile. Die Widerlagerplatte 19 stützt sich an einem Ring 24 ab, der in einer ringförmigen Nut in dem Kupplungsträger 22 sitzt.

Die Reibscheiben 20 weisen jeweils zwei Reibbeläge 25 auf, die im Vergleich zu den Reibbelägen 15 der ersten Trockenkupplung 7 kleinere Durchmesser aufweisen. Entsprechend ist die sich daraus ergebende Reibfläche zwischen einer Platte 18, 19, 21 und einer Reibscheibe 20 der zweiten Trockenkupplung 8 kleiner als die Reibfläche zwischen einer Platte 9, 11 und der Reibscheibe 15 der ersten Trockenkupplung 11, wodurch bei gleich großer axialer Druckkraft pro Reibscheibe weniger Drehmoment übertragen werden kann. Durch das Vorsehen von zwei Reibscheiben 20 mit der dazwischen liegenden Zwischenplatte 21 wird jedoch eine ausreichende Drehmomentübertragungskapazität der zweiten Trockenkupplung sichergestellt.

In radialer Richtung gesehen zwischen Druckplatte 18 und Getriebeeingangswelle 6 ist ein gedichtetes Radiallager 26 angeordnet, das als Rillenkugellager ausgebildet ist, aber auch als Zylinderrollenlager oder als Gleitlager ausgebildet sein kann. Das Radiallager 26, stützt sich dabei auf einer Nabe 27 ab, die axial verschiebbar, aber drehfest auf der Getriebeeingangswelle 6 sitzt. Über die Nabe 27 sind die Reibscheiben 20 drehfest mit der zweiten Getriebeeingangswelle 6 verbunden. Bezogen auf die Nabe 27 sind die Reibscheiben 20 einzeln auch untereinander axial verschiebbar, um einen Belagverschleiß ausgleichen zu können.

Im Vergleich zur zweiten Trockenkupplung 8 weist die erste Trockenkupplung 7 aufgrund der im Durchmesser größeren Druckplatte 9 und Widerlagerplatte 11 eine größere Wärmekapazität auf. Daher sollte die erste Trockenkupplung, wenn sie in einem Kraftfahrzeug eingebaut ist, als Anfahrkupplung verwendet werden, da die beim Anfahren erzeugte Reibenergie oder Wärmemenge somit besser aufgenommen werden kann. Weist das Schaltgetriebe mit den zwei Teilgetrieben beispielsweise 6 Gänge auf, würden die Gänge 1, 3 und 5 entsprechend auf die erste Getriebeeingangswelle 5 und die Gänge 2, 4 und 6 auf die zweite Getriebeeingangswelle 6 gelegt werden.

Aufgrund ihres großen Massenträgheitsmoments kann die Widerlagerplatte 11 zugleich als ein Schwungrad betrachtet werden, das mit einer Verzahnung 28 mit dem Torsionsschwingungsdämpfer 2 in Eingriff steht. Die Widerlagerplatte 11, die über mehrere am Umfang verteilte Befestigungsmittel, hier Nieten 29, fest mit dem Kupplungsdeckel 12 und damit auch fest mit dem Kupplungsträger 22 verbunden ist, stützt sich über ein integriertes Axiallager 30 (Gleit- oder Wälzlager; hier ein Axialnadellager) an der Getriebeeingangswelle 5 ab. Dabei dient ein formschlüssig mit der Getriebeeingangswelle verbundener Ring 31 als axiale Anlage für das Axiallager 30. Durch das Axiallager können die Betätigungskräfte, die zum Betätigen der ersten und zweiten Trockenkupplung 7, 8 aufgebracht werden, von den Getriebehauptlagern des Schaltgetriebes aufgenommen werden. Auch die radial wirkenden Kräfte, die über das Radiallager 26 auf die zweite Getriebeeingangswelle 6 übertragen werden, können aufgrund der erfindungsgemäßen Lageranordnung von den Getriebehauptlagern aufgenommen werden.

Wie der Figur 1 zu entnehmen ist, ist ein Innendurchmesser 32 der Druckplatte 9 der ersten oder äußeren Trockenkupplung 7 größer als ein Außendurchmesser 33 der Druckplatte 18 der zweiten oder inneren Trockenkupplung 8. Dadurch ist es - mit entsprechender Dimensionierung der zugehörigen Reibbelägen, Widerlagerplatten und Zwischenplatte - möglich, dass die beiden Trockenkupplungen in radialer Richtung gesehen übereinander angeordnet werden können beziehungsweise in axialer Richtung verschachtelt sind. Dies ermöglicht eine kleine Bauhöhe der Doppelkupplung 1 in axialer Richtung. Der radiale Abstand zwischen der Druckplatte 9 und der Druckplatte 18 ist dabei so groß, das dazwischen genügend Bauraum für den Kupplungsträger 22 zur Aufnahme der Platten 18, 21 und 19 der inneren Trockenkupplung vorhanden ist. Vorteilhaft ist auch das vergleichsweise geringe Massenträgheitsmoment einer solchen geschachtelten Bauform.

Die beiden Trockenkupplungen 7, 8 der Doppelkupplung 1 werden von einer Motorseite, die in der Figur 1 mit 34 bezeichnet wird und zur Kurbelwelle 4 zugewandt ist, durch die Widerlagerplatte 11 abgedeckt, die sich bis zu der Getriebeeingangswelle erstreckt, auf der das Axiallager 30 angeordnet ist. Das Axiallager 30 weist Dichtungen 35 auf, die ein motorseitiges Eintreten von Schmutz verhindern.

Auf einer entgegen gesetzten Seite, einer Getriebeseite 36 der Doppelkupplung 1, ist eine Betätigungseinrichtung 37 angeordnet, durch die die Druckplatten 9, 18 der Trockenkupplungen, 7, 8 axial betätigbar sind. Die Betätigungseinrichtung 37 umfasst eine erste Gruppe von Hebeln 38 (insbesondere zu erkennen in der oberen Kupplungshälfte), die sich mit einem radial gesehen äußeren Ende 39 an dem Kupplungsdeckel 12 abstützen. Ein radial gesehen inneres Ende 40 ist axial bewegbar und dient als Anlage für ein hier nicht dargestelltes Drucklager. Zwischen dem äußeren Ende 39 und dem inneren Ende 40 weist der Hebel 38 eine Anlagefläche 41 auf, mit der er an einem Nocken 42 der Druckplatte 15 anliegt. Wird nun das innere Ende 40 zur Motorseite 34 gedrückt, schwenkt der Hebel 38 um sein äußeres Ende 39, so dass die Druckplatte 15 gegen die Widerlagerplatte 11 gedrückt wird. Aufgrund der Hebelwirkung ist die Kraft an der Anlagefläche 41 größer als die Kraft am inneren Ende 40 des Hebels 38.

Zur axialen Abstützung der ersten Gruppe von Hebeln 38 weist der Kupplungsdeckel 12 einen radial nach innen gerichteten Abschnitt 43 mit einer ringförmigen Ausprägung 44 auf, an der die Hebel 39 anliegen.

Durch eine zweite Gruppe von Hebeln 45, die sich wie die Hebel 38 in radialer Richtung erstrecken, lässt sich die Druckplatte 18 der zweiten Trockenkupplung 8 betätigen. Auch hier stützt sich ein radial gesehen äußeres Ende 46 des Hebels 45 an dem Kupplungsdeckel 12 ab, während ein radial gesehen inneres Ende 47 axial bewegbar ist. Zwischen innerem und äußeren Ende 46, 47 des Hebels 45 ist eine Anlagefläche 48 vorgesehen, die an einem Nocken 49 der Druckplatte 18 anliegt.

Zur Abstützung der Hebel 45 weist der Kupplungsdeckel 12 radial nach innen gerichtete Zungen 50 (siehe untere Kupplungshälfte der Figur 1) auf. Die Zungen 50 sind in Umfangsrichtung zueinander beabstandet angeordnet, so dass zwischen ihnen die Hebel 38 zur Betätigung der ersten Trockenkupplung 7 verlaufen können. Somit zeichnet sich der Kupplungsdeckel 12 dadurch aus, dass er die Hebel 38 und 45 gleichzeitig abstützt.

Beide Trockenkupplungen 7, 8 sind sogenannte "normally-open"-Kupplungen, das heißt ohne Anliegen einer Betätigungskraft übertragen sie kein Drehmoment. Die beiden Trockenkupplungen 7, 8 müssen aktiv zusammengedrückt werden, um Drehmoment zu übertragen.

Die erfindungsgemäße Doppelkupplung kann in einer Getriebekupplungsglocke (nicht dargestellt) vormontiert, eingelernt und getestet werden. Gemeinsam mit dem Getriebe lässt sich die Doppelkupplung 1 auf die Verzahnung 28 schieben, die das Drehmoment der Kurbelwelle 4 wahlweise mit zwischengeschaltetem Torsionsschwingungsdämpfer 2 auf die Doppelkupplung 1 überträgt. Eine zylindrische Führung 52 sorgt für eine zusätzliche radiale Abstützung der Doppelkupplung 1. Durch die kompakte Bauform kann der Einsatz eines konventionellen Kupplungsdämpfers vorgesehen werden, der separat an die Kurbelwelle 4 montiert wird.

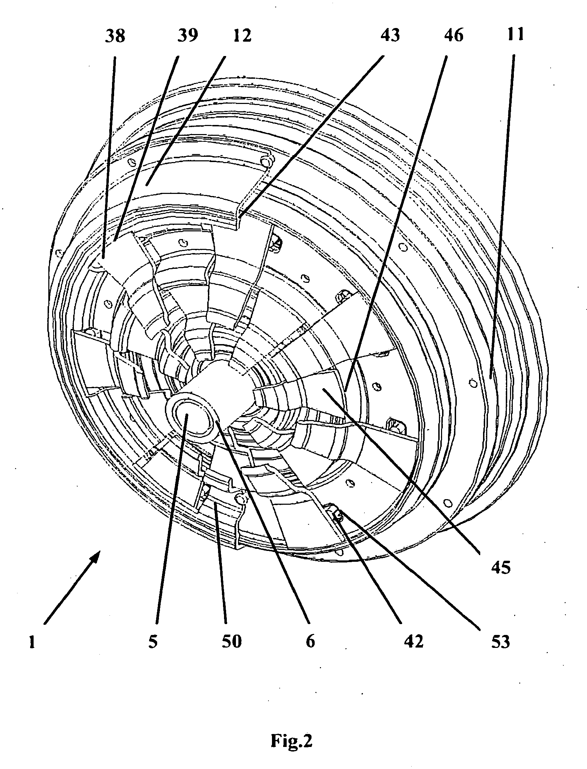

Figur 2 zeigt in perspektivischer Ansicht die Doppelkupplung 1, wobei der Kupplungsdeckel 12 über dessen halben Umfangs nicht dargestellt ist. Wie oben bereits erwähnt, stützen sich die Hebel 38 mit ihren äußeren Enden 39 an dem nach innen gezogenen Abschnitt 43 des Kupplungsdeckels 12 ab. In Umfangsrichtung jeweils zwischen den einzelnen Hebeln 38 sind die Hebel 45 angeordnet, die sich an den radial nach innen gerichteten Zungen 50 abstützen. Zu erkennen sind am Umfang verteilte Öffnungen 53, durch die die Nocken 42 (siehe Figur 1) der Druckplatte 9 greifen, wobei die Nocken 42 durch die über die Öffnungen 53 verlaufenden Hebel 38 in der Figur 2 teilweise verdeckt sind.

### Doppelkupplung

### Bezugszeichenliste

- 1: Doppelkupplung
- 2: Torsionsschwingungsdämpfer
- 3: Schraube
- 4: Kurbelwelle
- 5: Erste Getriebeeingangswelle
- 6: Zweite Getriebeeingangswelle
- 7: Erste Trockenkupplung
- 8: Zweite Trockenkupplung
- 9: Druckplatte
- 10: Reibscheibe
- 11: Widerlagerplatte
- 12: Kupplungsdeckel
- 13: Nabe
- 14: Zahnwellenprofil
- 15: Reibbelag
- 16: Reibbelagsträger
- 17: Radialsteg
- 18: Druckplatte
- 19: Widerlagerplatte
- 20: Reibscheibe
- 21: Zwischenplatte
- 22: Kupplungsträger
- 23: Zahn-/Keilwellenprofil
- 24: Ring
- 25: Reibbelag
- 26: Radiallager (Zweites Lager)
- 27: Nabe
- 28: Verzahnung
- 29: Niete
- 30: Axiallager (Erstes Lager)
- 31: Ring
- 32: Innendurchmesser
- 33: Außendurchmesser
- 34: Motorseite
- 35: Dichtungen
- 36: Getriebeseite
- 37: Betätigungseinrichtung
- 38: Erste Gruppe von Hebeln
- 39: Äußeres Ende
- 40: Inneres Ende
- 41: Anlagefläche
- 42: Nocken
- 43: Abschnitt
- 44: Ausprägung
- 45: Zweite Gruppe von Hebeln
- 46: Äußeres Ende
- 47: Inneres Ende
- 48: Anlagefläche
- 49: Nocken
- 50: Zunge
- 51: Niete
- 52: Führung
- 53: Öffnung
- A: Achse

## Patentansprüche

1. Doppelkupplung (1) für ein Getriebe mit einer ersten Getriebeeingangswelle (5) und einer dazu koaxial angeordneten zweiten Getriebeeingangswelle (6), umfassend:
- einen um die Achse (A) der Getriebeeingangswellen (5, 6) drehbaren Kupplungsdeckel (12), der drehfest mit einer Antriebswelle (4) eines Motors direkt oder indirekt über einen zwischengeschalteten Torsionsschwingungsdämpfer (2) verbindbar ist;
- eine der ersten Getriebeeingangswelle (5) zugeordnete erste Trockenkupplung (7) mit einer Druckplatte (9), einer Widerlagerplatte (11) und mit einer Reibscheibe (10), die zwischen der Druckplatte (9) und der Widerlagerplatte (11) angeordnet ist,
- eine der zweiten Getriebeeingangswelle (6) zugeordnete zweite Trockenkupplung (8) mit einer Druckplatte (18), einer Widerlagerplatte (19) und mit einer Reibscheibe (20), die zwischen der Druckplatte (18) und der Widerlagerplatte (19) angeordnet ist,
- eine Betätigungseinrichtung (37), die zur Betätigung der Druckplatte (9) der ersten Trockenkupplung (7) und zur Betätigung der Druckplatte (18) der zweiten Trockenkupplung (8) dient, wobei die Druckplatte (9) der ersten Trockenkupplung (7) einen Innendurchmesser (32) aufweist, der größer ist als ein Außendurchmesser (33) der Druckplatte (18) der zweiten Trockenkupplung (8),
**dadurch gekennzeichnet, dass** an einer Getriebeseite (36) ein erstes Lager (26) vorgesehen ist, das zur radialen Abstützung der Doppelkupplung (1) dient und sich in Einbaulage der Doppelkupplung (1) an einer der Getriebeeingangswellen (5,6) abstützt, wobei das erste Lager (26) in radialer Richtung gesehen zwischen der Druckplatte (18) der zweiten Trockenkupplung (8) und einer Nabe (27) angeordnet ist, die drehfest und axial verschiebbar mit der zweiten Getriebeeingangswelle (6) verbindbar ist.

2. Doppelkupplung (1) nach Anspruch 1, **dadurch gekennzeichnet, dass** die zweite Trockenkupplung (8) wenigstens zwei Reibscheiben (20) und wenigstens eine Zwischenplatte (21) aufweist, die zwischen den Reibscheiben (20) angeordnet ist.

3. Doppelkupplung (1) nach Anspruch 1 oder 2, **dadurch gekennzeichnet, dass** an einer Motorseite (34) der Doppelkupplung (1) ein zweites Lager (30) vorgesehen ist, das zur axialen Abstützung der ersten Trockenkupplung (7) und der zweiten Trockenkupplung (8) dient und sich in Einbaulage der Doppelkupplung (1) an einer der Getriebeeingangswellen (5, 6) abstützt.

4. Doppelkupplung (1) nach Anspruch 3, **dadurch gekennzeichnet, dass** das zweite Lager (30) neben der axialen Abstützung auch zur radialen Abstützung der Doppelkupplung an einer der Getriebeeingangswellen (5,6) dient.

5. Doppelkupplung (1) nach einem der Ansprüche 1 bis 4, **dadurch gekennzeichnet, dass** an der Motorseite (34) ein ringförmiger Vorsprung ausgebildet ist.

6. Doppelkupplung (1) nach einem der Ansprüche 1 bis 5, **dadurch gekennzeichnet, dass** die Reibscheiben (20) der zweiten Trockenkupplung (8) drehfest und axial verschiebbar mit der Nabe (27) verbunden sind.

7. Doppelkupplung (1) nach einem der Ansprüche 1 bis 6, **dadurch gekennzeichnet, dass** die Druckplatte (9) und die Widerlagerplatte (11) der ersten Trockenkupplung (7) drehfest mit dem Kupplungsdeckel (12) verbunden ist und die Reibscheibe (20) der ersten Trockenkupplung (7) drehfest mit der ersten Getriebeeingangswelle (5) verbunden ist.

8. Doppelkupplung (1) nach Anspruch 1, **dadurch gekennzeichnet, dass** die Druckplatte (18) und die Widerlagerplatte (19) der zweiten Trockenkupplung (8) drehfest mit dem Kupplungsdeckel (12) verbunden ist.

9. Doppelkupplung (1) nach einem der Ansprüche 1 bis 8, **dadurch gekennzeichnet, dass** die Betätigungseinrichtung (37) eine erste Gruppe von sich in radialer Richtung erstreckenden Hebeln (38) umfasst, durch die die Druckplatte (9) der ersten Trockenkupplung (7) betätigbar ist, wobei sich die Hebel (38) mit einem radial äußeren Ende (39) an dem Kupplungsdeckel (12) in axialer Richtung abstützen und wobei deren jeweils radial innere Enden (40) axial bewegbar sind.

10. Doppelkupplung (1) nach Anspruch 9, **dadurch gekennzeichnet, dass** der Kupplungsdeckel (12) einen ringförmige Auflagefläche für die erste Gruppe von Hebeln (38) aufweist.

11. Doppelkupplung (1) nach Anspruch 1, **dadurch gekennzeichnet, dass** die Betätigungseinrichtung (37) eine zweite Gruppe von sich in radialer Richtung erstreckenden Hebeln (45) umfasst, durch die die Druckplatte (18) der zweiten Trockenkupplung (8) betätigbar ist, wobei sich die Hebel (45) mit einem radial äußeren Ende (46) an dem Kupplungsdeckel (12) in axialer Richtung abstützen und wobei deren jeweils radial innere Enden (47) axial bewegbar sind.

12. Doppelkupplung (1) nach Anspruch 11, **dadurch gekennzeichnet, dass** der Kupplungsdeckel (12) eine Auflagefläche für die zweite Gruppe von Hebeln (45) aufweist, die durch mehrere radial nach innen gerichtete Zungen (50) gebildet wird.

13. Doppelkupplung (1) nach Anspruch 1, **dadurch gekennzeichnet, dass** die erste Gruppe von Hebeln (38) an jeweils deren radial äußeren Enden (39) miteinander verbunden sind und/oder die zweite Gruppe von Hebeln (45) an jeweils deren radial äußeren Enden (46) miteinander verbunden sind.

14. Doppelkupplung (1) nach Anspruch 12 oder 13, **dadurch gekennzeichnet, dass** die Zungen (50) und die Hebel der ersten Gruppe von Hebeln (38) in Umfangsrichtung alternierend angeordnet sind.

## Claims

1. Dual clutch (1) for a transmission having a first transmission input shaft (5) and a second transmission input shaft (6) which is arranged coaxially with respect to the former, comprising:
- a clutch cover (12) which can be rotated about the axis (A) of the transmission input shafts (5, 6) and can be connected fixedly in terms of rotation to a drive shaft (4) of an engine directly or indirectly via a torsional vibration damper (2) which is connected in between;
- a first dry clutch (7) which is assigned to the first transmission input shaft (5) and has a pressure plate (9), an abutment plate (11) and a friction disc (10) which is arranged between the pressure plate (9) and the abutment plate (11),
- a second dry clutch (8) which is assigned to the second transmission input shaft (6) and has a pressure plate (18), an abutment plate (19) and a friction disc (20) which is arranged between the pressure plate (18) and the abutment plate (19),
- an actuating device (37) which serves to actuate the pressure plate (9) of the first dry clutch (7) and to actuate the pressure plate (18) of the second dry clutch (8), the pressure plate (9) of the first dry clutch (7) having an internal diameter (32) which is larger than an external diameter (33) of the pressure plate (18) of the second dry clutch (8),
**characterized in that** a first bearing (26) is provided on one transmission side (36), which first bearing (26) serves to support the dual clutch (1) radially and is supported on one of the transmission input shafts (5, 6) in the installed position of the dual clutch (1), the first bearing (26) being arranged, as viewed in the radial direction, between the pressure plate (18) of the second dry clutch (8) and a hub (27) which can be connected to the second transmission input shaft (6) in a rotationally fixed and axially displaceable manner.

2. Dual clutch (1) according to Claim 1, **characterized in that** the second dry clutch (8) has at least two friction discs (20) and at least one intermediate plate (21) which is arranged between the friction discs (20).

3. Dual clutch (1) according to Claim 1 or 2, **characterized in that** a second bearing (30) is provided on an engine side (34) of the dual clutch (1), which second bearing (30) serves to support the first dry clutch (7) and the second dry clutch (8) axially and is supported on one of the transmission input shafts (5, 6) in the installed position of the dual clutch (1).

4. Dual clutch (1) according to Claim 3, **characterized in that**, in addition to supporting axially, the second bearing (30) also serves to support the dual clutch radially on one of the transmission input shafts (5, 6).

5. Dual clutch (1) according to one of Claims 1 to 4, **characterized in that** an annular projection is formed on the engine side (34).

6. Dual clutch (1) according to one of Claims 1 to 5, **characterized in that** the friction discs (20) of the second dry clutch (8) are connected to the hub (27) in a rotationally fixed and axially displaceable manner.

7. Dual clutch (1) according to one of Claims 1 to 6, **characterized in that** the pressure plate (9) and the abutment plate (11) of the first dry clutch (7) are connected to the clutch cover (12) in a rotationally fixed manner and the friction disc (20) of the first dry clutch (7) is connected to the first transmission input shaft (5) in a rotationally fixed manner.

8. Dual clutch (1) according to Claim 1, **characterized in that** the pressure plate (18) and the abutment plate (19) of the second dry clutch (8) are connected to the clutch cover (12) in a rotationally fixed manner.

9. Dual clutch (1) according to one of Claims 1 to 8, **characterized in that** the actuating device (37) comprises a first group of levers (38) which extend in the radial direction and by which the pressure plate (9) of the first dry clutch (7) can be actuated, the levers (38) being supported in the axial direction on the clutch cover (12) by way of one radially outer end (39), and their respectively radially inner ends (40) being axially movable.

10. Dual clutch (1) according to Claim 9, **characterized in that** the clutch cover (12) has an annular contact face for the first group of levers (38).

11. Dual clutch (1) according to Claim 1, **characterized in that** the actuating device (37) comprises a second group of levers (45) which extend in the radial direction and by which the pressure plate (18) of the second dry clutch (8) can be actuated, the levers (45) being supported in the axial direction on the clutch cover (12) by way of one radially outer end (46), and their respectively radially inner ends (47) being axially movable.

12. Dual clutch (1) according to Claim 11, **characterized in that** the clutch cover (12) has a contact face for the second group of levers (45), which contact face is formed by a plurality of radially inwardly directed tongues (50).

13. Dual clutch (1) according to Claim 1, **characterized in that** the first group of levers (38) are connected to one another in each case at their radially outer ends (39) and/or the second group of levers (45) are connected to one another in each case at their radially outer ends (46).

14. Dual clutch (1) according to Claim 12 or 13, **characterized in that** the tongues (50) and the levers of the first group of levers (38) are arranged in an alternating manner in the circumferential direction.

## Revendications

1. Embrayage double (1) pour une boîte de vitesses avec un premier arbre d'entrée de boîte de vitesses (5) et un deuxième arbre d'entrée de boîte de vitesses (6) disposé coaxialement à celui-ci, comprenant:
- un couvercle d'embrayage (12) pouvant tourner autour de l'axe (A) des arbres d'entrée de boîte de vitesses (5, 6), qui peut être relié de façon solidaire en rotation à un arbre d'entraînement (4) d'un moteur, directement ou indirectement au moyen d'un amortisseur de vibrations de torsion (2) disposé entre eux;
- un premier embrayage à sec (7) associé au premier arbre d'entrée de boîte de vitesses (5), avec un plateau de pression (9), un plateau de butée (11) et avec un disque de friction (10), qui est disposé entre le plateau de pression (9) et le plateau de butée (11);
- un deuxième embrayage à sec (8) associé au deuxième arbre d'entrée de boîte de vitesses (6), avec un plateau de pression (18), un plateau de butée (19) et avec un disque de friction (20), qui est disposé entre le plateau de pression (18) et le plateau de butée (19);
- un dispositif d'actionnement (37), qui sert pour actionner le plateau de pression (9) du premier embrayage à sec (7) et pour actionner le plateau de pression (18) du deuxième embrayage à sec (8), dans lequel le plateau de pression (9) du premier embrayage à sec (7) présente un diamètre intérieur (32) qui est plus grand qu'un diamètre extérieur (33) du plateau de pression (18) du deuxième embrayage à sec (8),
**caractérisé en ce qu'**il est prévu sur un côté boîte de vitesses (36) un premier palier (26), qui fait office d'appui radial pour l'embrayage double (1) et qui, lorsque l'embrayage double (1) est monté, s'appuie sur un des arbres d'entrée de boîte de vitesses (5, 6), dans lequel le premier palier (26), vu en direction radiale, est disposé entre le plateau de pression (18) du deuxième embrayage à sec (8) et un moyeu (27), qui peut être relié de façon solidaire en rotation et coulissante axialement au deuxième arbre d'entrée de boîte de vitesses (6).

2. Embrayage double (1) selon la revendication 1, **caractérisé en ce que** le deuxième embrayage à sec (8) comprend au moins deux disques de friction (20) et au moins un plateau intermédiaire (21), qui est disposé entre les disques de friction (20).

3. Embrayage double (1) selon la revendication 1 ou 2, **caractérisé en ce qu'**il est prévu, sur un côté moteur (34) de l'embrayage double (1), un deuxième palier (30), qui fait office d'appui axial pour le premier embrayage à sec (7) et le deuxième embrayage à sec (8) et qui, lorsque l'embrayage double (1) est monté, s'appuie sur un des arbres d'entrée de boîte de vitesses (5, 6).

4. Embrayage double (1) selon la revendication 3, **caractérisé en ce que** le deuxième palier (30) fait également office d'appui radial, en plus de l'appui axial, pour l'embrayage double sur un des arbres d'entrée de boîte de vitesses (5, 6).

5. Embrayage double (1) selon l'une quelconque des revendications 1 à 4, **caractérisé en ce qu'**une saillie annulaire est formée sur le côté moteur (34).

6. Embrayage double (1) selon l'une quelconque des revendications 1 à 5, **caractérisé en ce que** les disques de friction (20) du deuxième embrayage à sec (8) sont reliés de façon solidaire en rotation et coulissante axialement au moyeu (27).

7. Embrayage double (1) selon l'une quelconque des revendications 1 à 6, **caractérisé en ce que** le plateau de pression (9) et le plateau de butée (11) du premier embrayage à sec (7) sont reliés de façon solidaire en rotation au couvercle d'embrayage (12) et le disque de friction (20) du premier embrayage à sec (7) est relié de façon solidaire en rotation au premier arbre d'entrée de boîte de vitesses (5).

8. Embrayage double (1) selon la revendication 1, **caractérisé en ce que** le plateau de pression (18) et le plateau de butée (19) du deuxième embrayage à sec (8) sont reliés de façon solidaire en rotation au couvercle d'embrayage (12).

9. Embrayage double (1) selon l'une quelconque des revendications 1 à 8, **caractérisé en ce que** le dispositif d'actionnement (37) comprend un premier groupe de leviers (38) s'étendant en direction radiale, au moyen desquels le plateau de pression (9) du premier embrayage à sec (7) peut être actionné, dans lequel les leviers (38) s'appuient en direction axiale, par une extrémité radialement extérieure (39), sur le couvercle d'embrayage (12) et dans lequel les extrémités respectives radialement intérieures (40) de ceux-ci sont mobiles axialement.

10. Embrayage double (1) selon la revendication 9, **caractérisé en ce que** le couvercle d'embrayage (12) présente une surface d'appui annulaire pour le premier groupe de leviers (38).

11. Embrayage double (1) selon la revendication 1, **caractérisé en ce que** le dispositif d'actionnement (37) comprend un deuxième groupe de leviers (45) s'étendant en direction radiale, au moyen desquels le plateau de pression (18) du deuxième embrayage à sec (8) peut être actionné, dans lequel les leviers (45) s'appuient en direction axiale, par une extrémité radialement extérieure (46), sur le couvercle d'embrayage (12) et dans lequel les extrémités respectives radialement intérieures (47) de ceux-ci sont mobiles axialement.

12. Embrayage double (1) selon la revendication 11, **caractérisé en ce que** le couvercle d'embrayage (12) présente une surface d'appui pour le deuxième groupe de leviers (45), qui est formée par plusieurs lamelles (50) dirigées radialement vers l'intérieur.

13. Embrayage double (1) selon la revendication 1, **caractérisé en ce que** le premier groupe de leviers (38) sont reliés l'un à l'autre à leurs extrémités respectives radialement extérieures (39) et/ou le deuxième groupe de leviers (45) sont reliés l'un à l'autre à leurs extrémités respectives radialement extérieures (46).

14. Embrayage double (1) selon la revendication 12 ou 13, **caractérisé en ce que** les lamelles (50) et les leviers du premier groupe de leviers (38) sont disposés en alternance en direction périphérique.
